# EUROPÄISCHE PATENTSCHRIFT

(11) **EP 0 404 289 B1**
(45) Veröffentlichungstag und Bekanntmachung des Hinweises auf die Patenterteilung: **03.05.1995**
(21) Anmeldenummer: 90250159.2
(22) Anmeldetag: 22.06.1990
(51) Int. Cl.: G02B 27/22, G03B 35/18, H04N 13/00

(54) **Wiedergabeeinrichtung für dreidimensionale Darstellung von Bildern**
Three dimensional image display device
Dispositif d'affichage d'images tridimensionnelles

(30) Priorität: 23.06.1989 DE 3921061
(43) Veröffentlichungstag der Anmeldung: 27.12.1990
(73) Patentinhaber: Heinrich-Hertz-Institut für Nachrichtentechnik Berlin GmbH, 10587 Berlin (DE)
(72) Erfinder: Börner, Reinhard, Dipl.-Ing., D-1000 Berlin 15 (DE)

(56) Entgegenhaltungen:
- DE-A- 3 700 525
- US-A- 4 304 477
- US-A- 4 927 238

## Beschreibung

Die Erfindung bezieht sich auf eine Wiedergabeeinrichtung für dreidimensionale Darstellung von Bildern, mit einer Zylinderlinsen-Rasterplatte vor einem flachen Bildschirm, auf dem mit konstanter Streifenbreite ineinander gerasterte Stereo-Teilbilder in Erscheinung treten.

Ein derartiger Stand der Technik kann insoweit einer größeren Zahl von Veröffentlichungen - z.B. der US-PS 4 214 257 sowie den Zeitschriften "Funkschau" Heft 25-26/1981, Seiten 60 bis 64, insbesondere Seiten 63 und 64, "Electronics Australia" Juli 1982, Seiten 12 bis 14, insbesondere Seite 14, und "IEEE Transactions on Consumer Electronics" Band CE-25, Februar 1979, Seiten 111 bis 113 - entnommen werden.

Wie die Veröffentlichungen zum Stand der Technik erkennen lassen, werden seit vielen Jahren in der Patent- und der technischen Fachliteratur im Hinblick auf die Möglichkeiten eines dreidimensionalen Fernsehens die unterschiedlichen optischen Systeme zum Erzeugen stereoskopischer und anderer dreidimensionaler Wirkungen unter theoretischen Gesichtspunkten behandelt. Obwohl dieses oder jenes System auch schon praktisch erprobt worden ist, hat bislang keines, besonders im öffentlichen Bereich, einen Marktdurchbruch erreicht.

Auf dem Gebiet der Büro-Kommunikation sind die Voraussetzungen für die Einführung neuer Systeme günstiger. So wird z.B. in "Zeitschrift der Tektronix GmbH, Köln" Juni 1987, Heft 3, Seiten 1 und 4 über einen 3D-Stereo-Grafik-Arbeitsplatz berichtet. Bei diesem Gerät enthält das Betrachtungssystem einen Flüssigkristall-Stereo-Schalter (LCSS), der abwechselnd die Bilder für das rechte und das linke Auge, jeweils in anderer Polarisierung, erscheinen läßt. Der Betrachter nimmt diese Bilder mittels einer Brille wahr, die für jedes Auge mit einem entsprechend polarisierten Glas versehen ist.

Bei Einrichtungen der erfindungsgemäßen Gattung handelt es sich hingegen um autostereoskopische Systeme. Die Erfindung will zur breitgefächerten Anwendung derartiger Betrachtungsgeräte sowohl für den Heimbedarf als auch für die Ausrüstung von Arbeitsplätzen beitragen. Dabei sollen autostereoskopische Sichtgeräte nicht nur auf Flüssigkristalldisplays (LCD) oder Plasmadisplays oder dergleichen beschränkt sein. Nach wie vor haben auch Geräte für Aufsicht- und Durchsicht-Bilder mit Hintergrundbeleuchtung ihre Bedeutung für gezeichnete, gedruckte oder fotografische Darstellungen. Voraussetzung ist in jedem Fall, daß diese Darstellungen in zwei oder mehreren Stereo-Perspektiven für räumliches Sehen hergestellt, in Bildstreifen zerlegt und für eine autostereoskopische Wiedergabe ineinander gerastert werden. Es sollen mittels der Erfindung also sowohl stehende als auch bewegte sowie ein- und mehr farbige Bilder autostereoskopisch wahrnehmbar sein, wobei als flache Bildschirme sowohl passive Elemente, z.B. Projektionsschirme, als auch aktive, mittels elektrischer Bildsignale steuerbare Displays, eingesetzt werden können.

Das der Erfindung zugrundliegende spezielle Problem besteht darin, bei einem autostereoskopischen System der zuvor genannten Art für den Betrachter einen möglichst großen Bewegungsspielraum zu schaffen, in dem die Wiedergabequalität gleichmäßig ist und Unschärfen, Übersprechen und andere nachteilige optische Wirkungen weitgehend ausgeschlossen werden.

Mit der Beeinflussung strahlengeometrischer Ursachen durch konstruktive Maßnahmen bei autostereoskopischen Systemen befaßt sich der aus der DE-OS 35 29 819 und der DE-OS 37 00 525 vorbekannte Stand der Technik. Dort wird bei einer Projektionseinrichtung für Parallax-Panoramagramme der Projektionsschirm, auf dem das räumlich wahrnehmbare Bild in Großformat erscheint, in der Horizontalen kreisförmig - d.h. vom Betrachter aus gesehen konkav - gekrümmt und außerdem zu den vertikalen Seitenrändern hin mit zunehmender Dicke ausgebildet. Prinzipiell läßt sich die Wirkung einer solchen konstruktiven Maßnahme zwar auch durch Änderung der Brechzahl des Materials der Zylinderlinsen-Rasterplatte oder der Pitchabmessungen der Zylinderlinsen von der Mitte zu beiden vertikalen Seitenrändern hin herbeiführen. Die jeweils günstigsten konstruktiven Maßnahmen müssen jedoch den speziell gegebenen Voraussetzungen und möglichen Fertigungstechnologien entsprechend unter Berücksichtigung ihrer gegenseitigen Wechselwirkungen ausgewählt werden.

Die technische Lehre gemäß der Erfindung besteht bei einem autostereoskopischen System der eingangs genannten Art in einer Anordnung von flachem Bildschirm und Zylinderlinsen-Rasterplatte in zueinander planparallel veränderbarer Positionierung sowie in einer Ausbildung der Zylinderlinsen-Rasterplatte mit in Horizontalrichtung symmetrisch von der Mitte zu beiden Seitenrändern hin zunehmender Dicke der Platte sowie abnehmender Pitchbreite der Zylinderlinsen.

Auf diese Weise ergibt sich eine Optimierung bezüglich der Anforderungen an die Qualität der Bildwiedergabe und an die Bewegungsfreiheit des Betrachters. Dies wäre nicht möglich, wenn ein Bildschirm mit konstantem Pixelabstand und ein Linsenraster mit ebenfalls konstanten Pitchabmessungen verwendet werden würden. Die Gesetze der Strahlengeometrie gebieten in einem solchen Fall, daß jedes Pixel- oder Bildstreifenpaar in einer parallel zum Bildschirm verlaufenden Ebene jeweils nur von einem Betrachterort aus gesehen werden kann, also einem Betrachter niemals gleichzeitig die Wahrnehmung aller Pixel- bzw. Bildstreifen ineinander gerasterter Teilbilder möglich ist.

Bezüglich der optischen Wirkung nur wenig besser, verbunden mit erheblichen fertigungstechnischen und sonstigen Nachteilen für den Gebrauch z.B. sowohl für Bild- als auch für Text-Darstellungen und Editierarbeiten mit und ohne Zylinderlinsen-Rasterplatte am selben Bildschirm, wäre eine Ausbildung des Bildschirmes mit sich zu den Seitenrändern hin änderndem Pixelrastermaß. Eine 3D-Wahrnehmung wäre zudem nur in der Hauptbetrachtungszone mit guter Wiedergabequalität zu erzielen.

In diesem Zusammenhang und auch nachfolgend für zweikanalige bzw. stereoskopische Wiedergabe ausgeführte Einzelheiten gelten ebenso für mehrkanalige bzw. Panoramagramm-Wiedergabe. Mehr als zwei, z.B. 10 ineinander gerasterte, senkrecht verlaufende Pixel- oder Bildstreifen pro Zylinderlinse ermöglichen durch seitliche Kopfbewegung dem Betrachter die Wahrnehmung unterschiedlicher Stereo-Paare, d.h. jeweils anderer, geringfügig unterschiedlicher Raumperspektiven, sogenannter Parallax-Panoramastereogramme.

Die erfindungsgemäße Lösung erlaubt, universeller verwendbare Bildschirme einzusetzen. Für die Zwecke der Erfindung wird das konstante Pixel- bzw. Bildstreifen-Rastermaß eines flachen Bildschirms beibehalten. Die in Horizontalrichtung der Zylinderlinsen-Rasterplatte sich ändernde Plattendicke und sich ändernden Linsenpitch-Abmessungen sowie der mehr oder weniger schmale Luftspalt zwischen Bildschirm und Zylinderlinsen-Rasterplatte resultieren im gewünschten Versatz von Linsenraster gegenüber Pixel- bzw. Bildstreifenraster des Bildschirmes. Damit die erfindungsgemäßen Maßnahmen zur optischen Korrektur einen überschaubaren Umfang behalten, sollte der flache Bildschirm immer mit ebener Bildfläche ausgebildet sein und ein konstantes Bildstreifen-Rastermaß gewährleisten.

Bei bevorzugten Ausführungsformen der Erfindung können mindestens zwei Zylinderlinsen-Rasterplatten für eine Wiedergabeeinrichtung mit einem flachen Bildschirm vorgesehen sein, wobei sich diese Platten als ein Satz z.B. für Nah- und Fernbetrachtung bzw. für zwei- oder jeweils eine mehrkanalige autostereoskopische Wiedergabe in voneinander abweichenden Ausbildungen bezüglich ihrer Dicken- und Pitch-Abmessungen unterscheiden. Nach Bedarf und den jeweiligen Gegebenheiten für Stereoskopie und Panoramagramm-Wiedergabe lassen sich die einzelnen Zylinderlinsen-Rasterplatten eines Satzes auswechseln. Bezüglich Nah-/Fernbetrachtung werden auf diese Weise Betrachterabstände ermöglicht, die sich voneinander erheblich unterscheiden.

Für Ausführungsformen der Erfindung, die einen erhöhten Komfort bieten, kann die Zylinderlinsen-Rasterplatte mit verstellbaren mechanischen Halterungen versehen sein, mit denen sich unabhängig voneinander der Abstand zwischen dem flachen Bildschirm und der Zylinderlinsen-Rasterplatte sowie die Positionierung der Zylinderlinsen-Rasterplatte in Horizontalrichtung verändern lassen. Derartige Positionierungs-, d.h. Horizontallage- und Abstandsänderungen sind in der Regel verhältnismäßig gering und bezwecken eine Feineinstellung für einen bestimmten Betrachterstandort bzw. -abstand. In weiterer Ausgestaltung dieser Ausführungsformen besonders vorteilhaft ist deren Ausrüstung mit steuerbaren, insbesondere fernsteuerbaren Antrieben für die Verstellung der Tiefen- bzw. Breitenrichtungs-Halterung. Die Steuersignale hierzu können auch von einer automatisch arbeitenden Einrichtung geliefert werden, die fortlaufend die Betrachterposition detektiert und auswertet.

Ein Farb-TV-Display, das als flacher Bildschirm bei erfindungsgemäßen Wiedergabeeinrichtungen anwendbar ist, muß bezüglich der Leuchtflecke für die Primärfarben, die jeweils einen Bildpunkt darstellen, in spezieller Weise ausgebildet sein. Dieses Problem ist in vorbekannten Veröffentlichungen entweder nicht oder aber sogar unzutreffend behandelt. Da die Zylinderlinsen vor dem Bildschirm mit senkrecht verlaufenden Zylinderachsen angeordnet sind, werden vertikale Bildstreifen jeweils voneinander getrennt wahrgenommen. Bei einem Farb-TV-Display, bei dem die Leuchtflecken der drei Primärfarben für die individuellen Bildpunkte horizontal benachbart sind, führen die vertikal verlaufenden Zylinderlinsen zur Wahrnehmung von Primärfarben-Teilbildern, nicht hingegen zur eigentlich bezweckten Wirkung, einer 3D-Wahrnehmung.

Für Ausführungsformen der Erfindung mit Farb-TV-Display als flachem Bildschirm ist also unabdingbar, daß dazu ein an sich bekannter Bildschirm (z.B. "Hitachi Color TFT", Liquid Crystal Display Module, TM 16 D01 HC) eingesetzt wird mit einer Anordnung von Leuchtflecken für die drei Primärfarben r, g, b (rot/grün/blau) in sich zeilenweise abwechselnden Primärfarben und deren spaltenweiser Zusammenfassung zu einzelnen Bildpunkten. Damit liegen also parallel zur Achse einer Zylinderlinse auf dem flachen Bildschirm in abwechselnder Folge r-, g-, b-Leuchtflecke, die jeweils zu individuellen farbigen, vertikal verlaufenden Bildstreifen gehören.

In vorteilhafter Ausgestaltung einer solchen Ausführungsform der Erfindung kann eine elektronische Steuerung des Bildschirms Einrichtungen für veränderbaren, einen seitlichen Versatz des Bildes um wenige Einheiten des Rasters bewirkenden Verzögerung aufweisen. Von einer mittleren Verzögerung aus lassen sich durch ihre Verringerung Links-, durch ihre Erhöhung Rechts-Verschiebungen im Bildstreifen-Rastermaß erzielen. Diese Maßnahmen können zweckmäßig als Zusatzmaßnahmen zu den weiter oben erläuterten, durch mechanische Verschiebung bewirkten Erscheinungen sowie zur Erzeugung einer gewollten bzw. Aufhebung einer ungewollten Pseudoskopie zur Anwendung kommen.

In der Zeichnung sind für die Ausführung der Erfindung schematisch die bedeutsamen Einzelheiten dargestellt. Es zeigen:
- Fig. 1:: eine Anordnung für Autostereoskopie mit einem flachen Bildschirm und einer Zylinderlinsen-Rasterplatte;
- Fig. 2:: einen Ausschnitt mit flachem Bildschirm und Zylinderlinsen-Rasterplatte sowie den Strahlenverlauf zwischen den beiden Augen eines Betrachters und den von dort aus wahrzunehmenden Bildpunkten bzw. -streifen, in einer horizontal verlaufenden Schnittebene;
- Fig. 3:: eine Darstellung ähnlich Fig. 2, jedoch einen größeren Ausschnitt mit den dort gegebenen Betrachtungszonen;
- Fig. 4:: einen Ausschnitt eines Farb-TV-Displays als flachem Bildschirm, in Ansicht, sowie entlang der dort angegebenen Schnittlinie die zugehörige Draufsicht mit flachem Bildschirm und Zylinderlinsen-Rasterplatte, für die 3D-Wahrnehmung eines Stereobildpaares
- und Fig. 5:: eine Darstellung ähnlich Fig. 4, jedoch für die Wahrnehmung von Farb-TV-Parallax-Panoramagrammen.

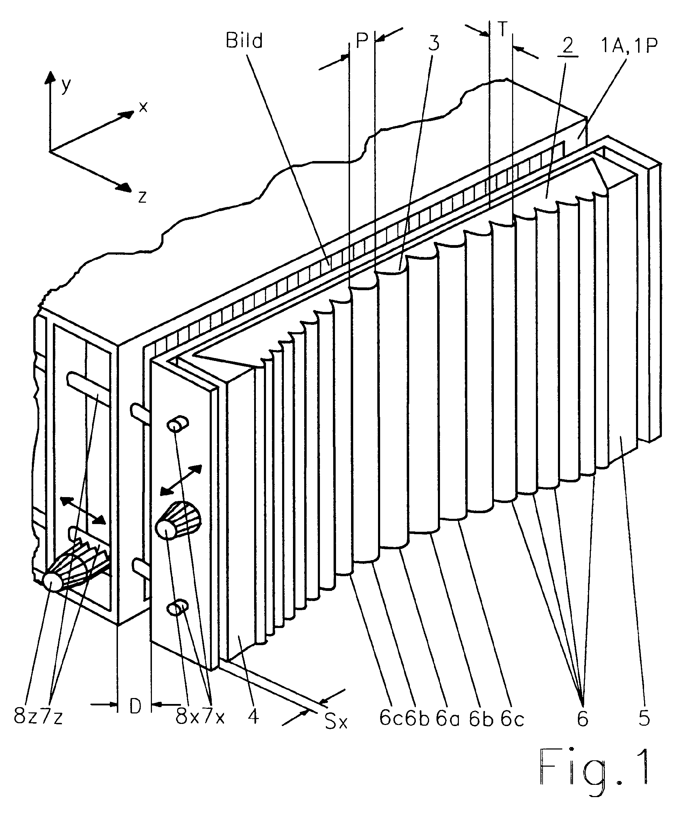

Die in Fig. 1 perspektivisch, in den drei Richtungen x, y, z des Raumes gezeigte Wiedergabeeinrichtung für dreidimensionale Wahrnehmung von Bildern besitzt einen flachen Bildschirm 1A bzw. 1P, der in einem Gehäuse in x-y-Richtung angeordnet ist. Ein Bildschirm 1A (Aktiv) ist z.B. ein Farb-TV-Display; ein Bildschirm 1P (Passiv) kann ein gedrucktes oder fotografisch gerastertes Aufsicht- oder Durchsichtbild enthalten. Auf dem flachen Bildschirm 1A bzw. 1P treten in jeweils benachbarten Paaren bzw. Gruppen vertikal - in y-Richtung - verlaufende Bildstreifen in Erscheinung, die alle dieselbe Breite haben.

Für die autostereoskopische Wahrnehmung dieser Bilder ist eine Zylinderlinsen-Rasterplatte 2 vorgesehen, deren Rückseite eben ausgebildet ist, und die im Abstand D planparallel zur Frontfläche des Bildschirms 1A, 1P verläuft. Diese Rasterplatte 2 ist von ihrer Mitte 3 aus zu beiden vertikalen Seitenrändern 4, 5 hin mit zunehmender Dicke T und abnehmender Pitchbreite P der Zylinderlinsen 6 gestaltet. Dem Betrachter bietet sich damit eine konkav gewölbte Frontfläche der Rasterplatte 2 mit vertikal - in y-Richtung verlaufenden Zylinderlinsen 6a, 6b, ... dar. Da die Pitchbreite P der Zylinderlinse 6a in der Mitte 3 der Zylinderlinsen-Rasterplatte 2 am größten ist und zu beiden Seitenrändern 4, 5 allmählich schmaler wird, entsteht ein Versatz zwischen den Bildstreifen auf dem Bildschirm 1A, 1P und den zugeordneten Zylinderlinsen 6. Dieser Versatz bewirkt zusammen mit der zu den Seitenrändern 4, 5 der Rasterplatte 2 zunehmenden Dicke T eine strahlengeometrische Korrektur, die über einen großen Schwenkbereich, d.h. mit großer Freiheit für seitliche Kopfbewegungen des Betrachters in x-Richtung bei im wesentlichen gleichbleibendem Abstand vom Bildschirm 1A, 1P, die Wahrnehmung von Stereobildern und Parallax-Panoramagrammen mit hoher und vor allem zu den seitlichen Bildrändern hin mit nahezu gleichbleibender Wiedergabequalität ermöglicht.

Der Abstand D zwischen Bildschirm 1A, 1P und Zylinderlinsen-Rasterplatte 2 ist in z-Richtung veränderbar. Dadurch läßt sich die Bildschärfeneinstellung in gewissen Grenzen korrigieren. Unabhängig vom jeweiligen Abstand D kann die Zylinderlinsen-Rasterplatte 2 auch in x-Richtung in den Grenzen der Verstellbreite Sx positioniert werden. Hierdurch läßt sich die Wahrnehmbarkeit der von einer vorgegebenen Betrachterposition bzw. aus einer der Panorama- oder Betrachtungszonen sichtbaren Stereopaare optimieren. Diese Abstands- bzw. Positionierungsänderungen können als mechanische Verschiebungen mittels einer Tiefenrichtungs-Halterung 7z bzw. einer Breitenrichtungs-Halterung 7x herbeigeführt werden, z.B. mittels Teleskopführungen, sowie durch Antriebe 8z bzw. 8x, die vorteilhaft über eine Fernsteuerung zu betätigen sind.

Einschränkungen der Bewegungsfreiheit bezüglich der Betrachtungsentfernung in x-Richtung zum Bildschirm 1A, 1P gelten innerhalb verhältnismäßig enger Grenzen immer nur für eine jeweils mit bestimmten Dicken- und Pitchabmessungen ausgebildete Zylinderlinsen-Rasterplatte 2. An Bildschirm-Arbeitsplätzen wird eine solche Betrachtungsentfernung ohnehin regelmäßig eingehalten. Die Grenzen der Bewegungsfreiheit in dieser Richtung liegen etwa zwischen dem 0,5-fachen und dem 2-fachen der optimalen Entfernung und sind dadurch erkennbar, daß dann zwischen den Stereoteilbildern ein Übersprechen wahrzunehmen ist.

Für Wiedergabeeinrichtungen, bei denen häufig sich erheblich unterscheidende Betrachtungsentfernungen, also Nah- und Fernbetrachtungen, gewünscht werden, können entsprechend dimensionierte Zylinderlinsen-Rasterplatten 2 als jeweils zusammengehöriger Satz bereitgestellt werden. Die Platten 2 eines solchen Satzes sind dann von Fall zu Fall zu wechseln. Sie können z.B. einen gemeinsamen Rahmen oder jede ihren eigenen Rahmen mit verstellbaren Breitenrichtungs-Halterungen 7 aufweisen. Für Stereo- und Panoramagramm-Wiedergabe ausgebildete Platten 2 eines Satzes unterscheiden sich in erster Linie durch die Pitchbreite und die Anzahl der Zylinderlinsen 6.

Ohne eine vorgesetzte Zylinderlinsen-Rasterplatte 2 läßt sich ein bei Ausführungsformen der Erfindung eingesetzter flacher Bildschirm 1A in herkömmlicher Weise, also für unverzerrte 2D-Bildwiedergabe und z.B. auch Textdarstellung, verwenden, da der konstante Pixel- bzw. Bildstreifenabstand für beide Einsatzarten benutzt wird. Die Maßnahmen der erfindungsgemäßen technischen Lehre beziehen sich bezüglich der optischen Korrektur für autostereoskopische Wahrnehmung auf die Ausbildung der Zylinderlinsen-Rasterplatte 2 und ihre Positionierbarkeit gegenüber dem flachen Bildschirm 1A, 1P.

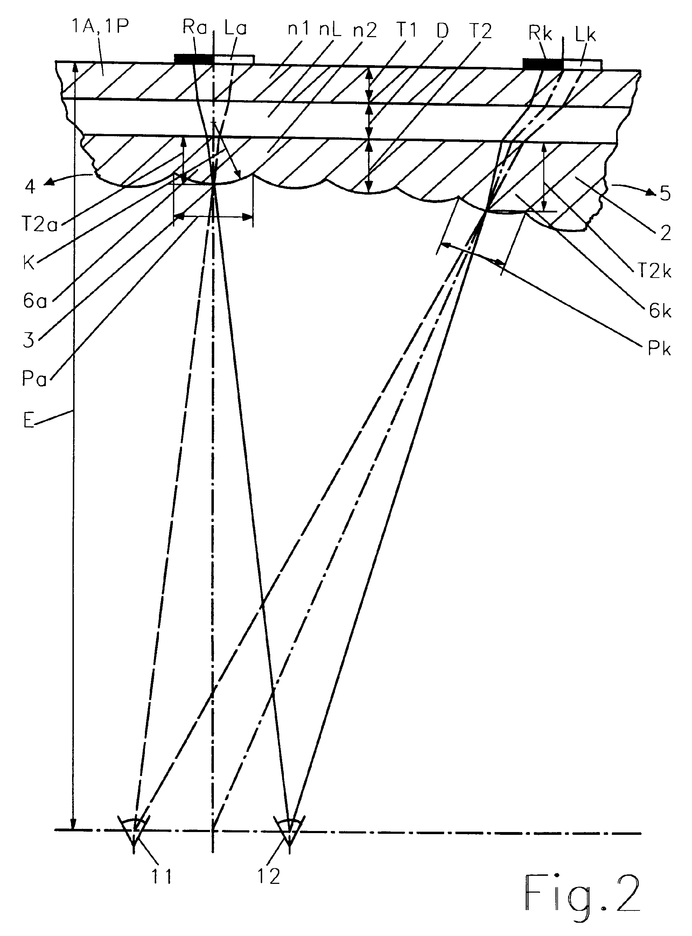

In Fig. 2 sind für eine solche optische Korrektur die zu berücksichtigenden Parameter verdeutlicht. Der flache Bildschirm 1A, 1P hat eine konstante Dicke T1. Auf seiner Rückseite befinden sich mit konstanter Breite und konstantem gegenseitigem Abstand die Pixel bzw. Bildstreifen für die Stereo-Teilbilder Ra, La, ..., Rk, Lk. Das Material des Bildschirmes 1A,1P habe die Brechzahl nl.

Die Zylinderlinsen-Rasterplatte 2 weist eine ebene Rückfläche auf, besteht aus einem Material mit der Brechzahl n2 und ist von der Mitte 3 zu beiden Seitenrändern 4, 5 hin mit zunehmender Dicke T2 sowie abnehmenden Pitchbreiten Pa, ..., Pk der Zylinderlinsen 6, ..., 6k ausgebildet.

Der Bildschirm 1A, 1P und die Zylinderlinsen-Rasterplatte 2 sind planparallel im Abstand D voneinander angeordnet. Der Zwischenraum ist mit Luft, Brechzahl nL = 1, erfüllt.

Im Abstand E vom Bildschirm 1A, 1P befinden sich die beiden Augen, 11 = linkes, 12 = rechtes Auge des Betrachters.

Die in Fig. 2 zwischen den Augen 11, 12 und den beiden beispielhaft gewählten Pixel-Paaren Ra/La, Rk/Lk auf dem Bildschirm 1A, 1P eingezeichneten Strahlenverläufe zeigen den durch Lichtbrechung beim Übergang von einem Medium in das andere und durch die Weglängen der Lichtstrahlen an diesen Orten im betreffenden Medium bewirkten Versatz. Die gewünschte optische Korrektur erfordert, daß für beide Augen 11, 12 eine optimale Zuordnung der Lichtstrahlen erfolgt, die von allen Paaren der Pixel bzw. Bildstreifen Ra/La, ..., Rk/Lk ausgehen.

Für die Dimensionierung frei wählbar - und z.B. durch iterative Berechnung zu bestimmen - sind dazu der Abstand D und bei der Zylinderlinsen-Rasterplatte 2 jeweils die Dicke T2a, . . ., T2k und die Pitchbreite Pa, ..., Pk. Die Berechnung erfolgt nach den Gesetzen der Strahlengeometrie für mehrlinsige Systeme, d.h. ein System mit: planparalleler Platte (Bildschirm 1A, 1P), planparallelem Luftspalt (D) und Plan-Konvex-Linsen (6a, ..., 6k). Für alle Zylinderlinsen 6a, ..., 6k ist der Krümmungsradius K jeweils derselbe.

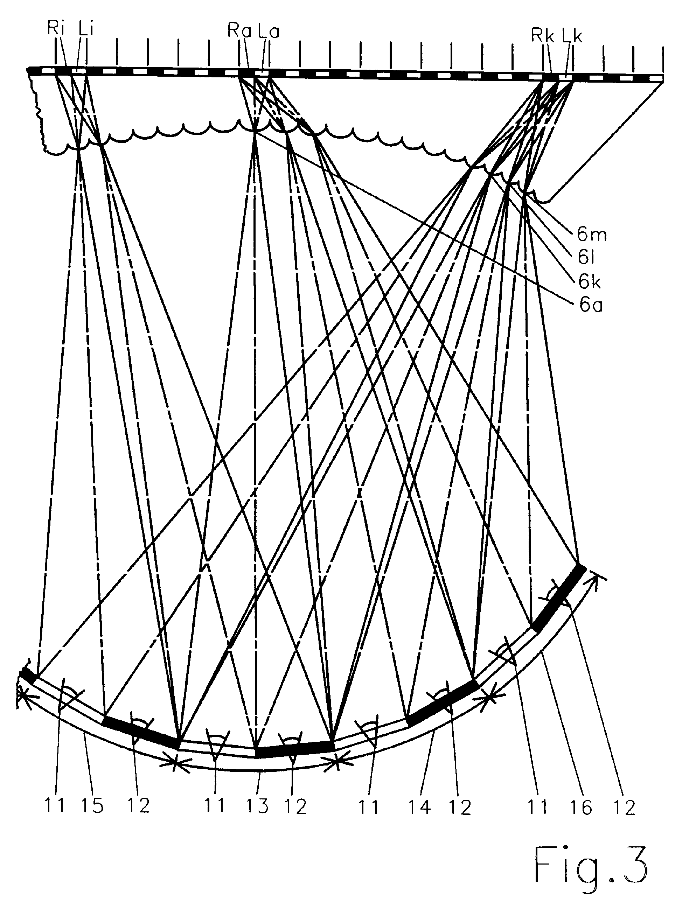

Die Darstellung in Fig. 3 läßt erkennen, daß sich die Maßnahmen gemäß der Erfindung zur optischen Korrektur bei einer Wiedergabeeinrichtung für autostereoskopische Wahrnehmung auf mehrere Betrachtungszonen 13, ..., 16 auswirken. Das heißt auch, daß zwei bis drei Betrachter gleichzeitig die Bildwiedergabe autostereoskopisch wahrnehmen können. Ein Betrachter, der sich in der Zone 13 befindet, sieht das Paar der Bildstreifen oder Pixel Rk/Lk durch die Linse 6k; dasselbe Paar Rk/Lk sehen Betrachter in den benachbarten Zonen 14 und 15 durch die der Zylinderlinse 6k rechts bzw. links benachbarte Zylinderlinse 6k+1/6k-1. Befindet sich übrigens ein Betrachter im Abstand einer halben Betrachtungszone seitlich versetzt, werden von seinen Augen 11, 12 alle Stereo-Teilbilder Rk/Lk seitenverkehrt - Lk/Rk - wahrgenommen. Der hierbei auftretende Effekt besteht in einer Umkehrung der Tiefeninformation und wird Pseudoskopie genannt. Weiter oben ist schon erwähnt, wie sich diese Wirkung bei einem aktiven Bildschirm 1A mit elektronisch steuerbarem Pixel- bzw. Bildstreifen-Versatz beeinflussen läßt.

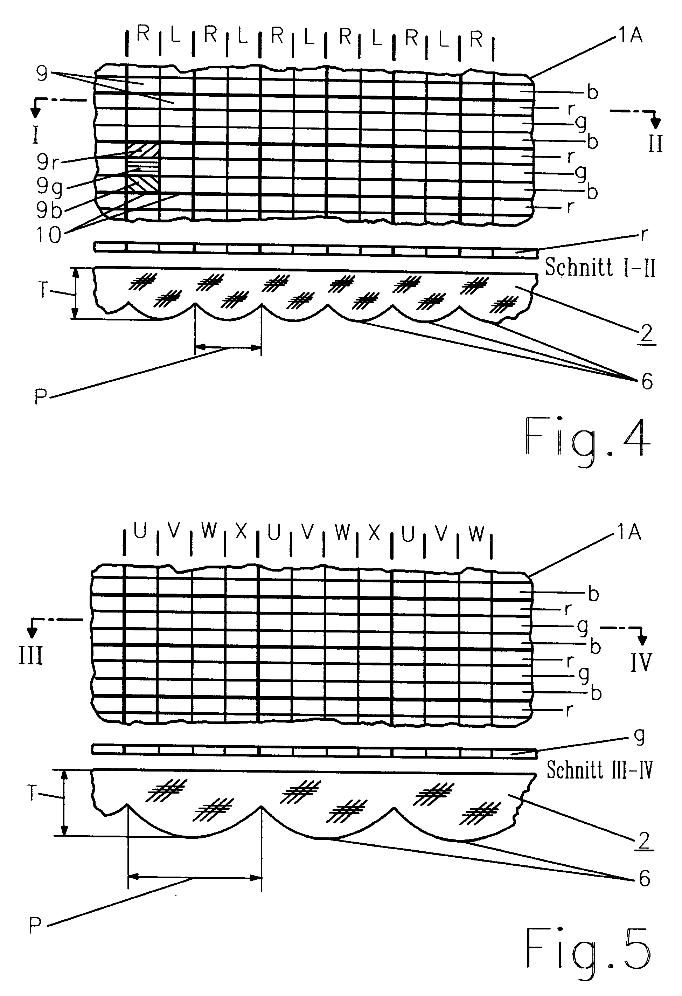

Anhand der Fig. 4 und 5 ist zunächst auf eine bedeutsame Einzelheit autostereoskopischer Systeme hinzuweisen. Bei einem Farb-TV-Display müssen beim flachen Bildschirm 1A die einzelnen Leuchtflecke 9 der Primärfarben rot - r -, grün - g - und blau - b -, die einem Bildpunkt 10 zugeordnet sind, vertikal benachbart sein. Ein solcher Bildpunkt 10 ist in Fig. 4 beispielhaft durch Schraffuren hervorgehoben. Anderenfalls würden Primärfarben-Bildstreifen durch die vorgesetzte Zylinderlinsen-Rasterplatte 2 wahrgenommen werden.

Dies bedeutet weiterhin, daß bei einer Pixel-Größe bereits handelsüblicher Flüssig-Kristall-Displays mit 0,3 mm Seitenlänge für ein Stereo-Bildstreifenpaar R, L nur 0,6 mm benötigt werden, also eine hohe Horizontalauflösung und damit eine entsprechend gute Tiefenwirkung zu erzielen ist.

Der in Fig. 4 dargestellte Ausschnitt eines Bildschirmes 1A mit einer Matrix von Leuchtflecken 9 zeigt vertikal verlaufende Stereo-Teilbildstreifen R, L, die aus Bildpunkten 10 zusammengesetzt sind. Jeder Bildpunkt 10 enthält je einen Leuchtfleck 9r, 9g, 9b. Leuchtflecke 9 derselben Primärfarbe sind horizontal benachbart.

Wie der Schnitt I-II in Fig. 4 zeigt, ist jedem Stereo-Teilbildstreifenpaar R, L bei der Zylinderlinsen-Rasterplatte 2 jeweils eine Zylinderlinse 6 zugeordnet. Im Unterschied hierzu zeigt in Fig. 5 der Schnitt III-IV die Zuordnung jeweils einer Stereo-Teilbild-Streifengruppe aus mehreren Bildstreifen, beispielsweise dort vier, zu jeder Zylinderlinse 6. Der besseren Übersicht wegen sind in den Fig. 4 und 5 die gemäß der Erfindung vorzusehenden Maßnahmen zur optischen Korrektur, also die Änderungen der Dicke T der Rasterplatte 2 und der Pitchabmessungen P bei den Zylinderlinsen 6, nicht dargestellt.

Die Fig. 5 verdeutlicht die Verhältnisse für eine Wiedergabe einrichtung zur Wahrnehmung von Parallax - Panoramagrammen. Dargestellt ist ein Beispiel mit vier Teilbildstreifen U, V, W, X. Ein Betrachter kann dabei aus einer ersten Entfernung die Stereo-Bildperspektiven U/V, V/W, W/X, aus einer kürzeren Entfernung die Perspektiven U/W, V/X und aus noch geringerem Abstand die Perspektive U/X wahrnehmen. Dies entspricht übrigens auch der Tiefenwahrnehmung in der Natur, d.h. je geringer der Abstand des Betrachters vom Objekt ist, desto größer ist die Tiefenwirkung.

## Patentansprüche

1. Wiedergabeeinrichtung für dreidimensionale Darstellung von Bildern, mit einer Zylinderlinsen-Rasterplatte vor einem flachen Bildschirm, auf dem mit konstanter Streifenbreite ineinander gerasterte Stereo-Teilbilder in Erscheinung treten,
**gekennzeichnet durch**
eine Anordnung von flachem Bildschirm (1A, 1P) und Zylinderlinsen-Rasterplatte (2) in zueinander planparallel veränderbarer Positionierung,
und durch
eine Ausbildung der Zylinderlinsen-Rasterplatte (2) mit in Horizontalrichtung symmetrisch von der Mitte (3) zu beiden Seitenrändern (4, 5) hin:
- zunehmender Dicke (T) der Platte (2) sowie
- abnehmender Pitchbreite (P) der Zylinderlinsen (6).

2. Wiedergabeeinrichtung nach Anspruch 1,
**gekennzeichnet durch**
mindestens zwei auswechselbare Zylinderlinsen-Rasterplatten (2), die sich als ein Satz in voneinander abweichenden Ausbildungen bezüglich ihrer Dicken- (T) und Pitch- (P) Abmessungen unterscheiden.

3. Wiedergabeeinrichtung nach Anspruch 1 oder 2,
**gekennzeichnet durch**
eine verstellbare Tiefenrichtungs-Halterung (7z), mit der sich der Abstand (D) zwischen dem flachen Bildschirm (1A, 1P) und der Zylinderlinsen-Rasterplatte (2) verändern läßt.

4. Wiedergabeeinrichtung nach einem der Ansprüche 1 bis 3,
**gekennzeichnet durch**
eine verstellbare Breitenrichtungs-Halterung (7x), mit der sich die Positionierung (Sx) der Zylinderlinsen-Rasterplatte (2) in Horizontalrichtung, parallel zum flachen Bildschirm (1A, 1P) verändern läßt.

5. Wiedergabeeinrichtung nach Anspruch 3 oder 4,
**gekennzeichnet durch**
steuerbare Antriebe (8z, 8x) zum Verstellen der Halterungen (7z, 7x).

6. Wiedergabeeinrichtung nach einem der Ansprüche 1 bis 5,
**gekennzeichnet durch**
einen an sich bekannten Bildschirm (1A) mit einer Anordnung von Leuchtflecken (9) für die drei Primärfarben (r, g, b) in sich zeilenweise abwechselnden Primärfarben und deren spaltenweiser Zusammenfassung zu einzelnen Bildpunkten (10).

7. Wiedergabeeinrichtung nach Anspruch 6,
**gekennzeichnet durch**
eine elektronische Steuerung des Bildschirmes (1A), die Einrichtungen zur veränderbaren, einen seitlichen Versatz des Bildes um wenige Einheiten des Rasters bewirkenden Verzögerung aufweist.

## Claims

1. Reproduction device for three-dimensional representation of images, having a cylindrical lens grid plate in front of a flat viewing screen, on which appear stereo partial images interlaced with a constant pitch,
**characterised by**
an arrangement of the flat viewing screen (1A, 1P) and the cylindrical lens grid plate (2) in positions that can be altered in a planeparallel manner relative to each other,
and by the cylindrical lens grid plate (2) being formed with thickness (T) increasing in the horizontal direction, symmetrically from the middle (3) towards both edges (4, 5),
and with pitch (P) of the cylindrical lenses (6) decreasing in the horizontal direction, symmetrically from the middle (3) towards both edges (4, 5).

2. Reproduction device according to claim 1,
characterised by at least two interchangeable cylindrical lens grid plates (2) which as a set differ from each other in their shape in relation to their sizes of thickness (T) and pitch (P).

3. Reproduction device according to claim 1 or 2,
characterised by an adjustable depthwise mounting support (7z), by which the distance (D) between the flat viewing screen (1A, 1P) and the cylindrical lens grid plate (2) can be changed.

4. Reproduction device according to one of the claims 1 to 3, characterised by an adjustable sidewise mounting support (7x), by which the positioning (Sx) of the cylindrical lens grid plate (2) can be changed in the horizontal direction, in parallel with the flat viewing screen (1A, 1P).

5. Reproduction device according to claim 3 or 4, characterised by controllable operating mechanisms (8z, 8x) for the adjustment of the mountings (7z, 7x).

6. Reproduction device according to one of the claims 1 to 5, characterised by a viewing screen (1A), known per se, having an arrangement of luminous spots (9) for the three primary colours (r, g, b) which alternate in lines, and the assembly of these luminous spots in columns to form individual image elements (10).

7. Reproduction device according to claim 6, characterised by an electronic control of the viewing screen (lA), which has devices for the delay, which can be changed and which effects a lateral displacement of the image by a few units of the viewing screen (1A).

## Revendications

1. Dispositif de reproduction pour la représentation tridimensionnelle d'images, avec une plaque à trame de lentilles cylindriques située devant un écran plat sur lequel apparaissent des images stéréoscopiques partielles tramées l'une dans l'autre avec une largeur de bande constante, caractérisé par un agencement de l'écran plat (1A, 1P) et de la plaque à trame (2) de lentilles cylindriques dans un positionnement variable dans des plans mutuellement parallèles, et par une configuration de la plaque à trame (2) de lentilles cylindriques comportant, symétriquement par rapport au milieu (3), dans le sens horizontal et en direction des deux bords latéraux (4, 5):
- une épaisseur (T) croissante de la plaque (2), ainsi que
- une largeur décroissante du pas (P) des lentilles cylindriques (6).

2. Dispositif de reproduction selon la revendication 1, caractérisé par au moins deux plaques à trame (2) de lentilles cylindriques, interchangeables, qui forment un jeu et se distinguent par des configurations mutuellement différentes des dimensions de leur épaisseur (T) et de leur pas (P).

3. Dispositif de reproduction selon la revendication 1 ou 2, caractérisé par un support (7z) ajustable dans le sens de la profondeur, qui permet de modifier l'écartement (D) entre l'écran plat (1A, 1P) et la plaque à trame (2) de lentilles cylindriques.

4. Dispositif de reproduction selon l'une quelconque des revendications 1 à 3, caractérisé par un support (7x) ajustable dans le sens de la largeur, permettant de modifier le positionnement (Sx) de la plaque à trame (2) de lentilles cylindriques dans le sens horizontal, parallèlement à l'écran plat (1A, 1P).

5. Dispositif de reproduction selon la revendication 3 ou 4, caractérisé par des entraînements asservis (8z, 8x) pour l'ajustement des supports (7z, 7x).

6. Dispositif de reproduction selon l'une quelconque des revendications 1 à 5, caractérisé par un écran (1A) en soi connu, comportant un agencement de spots lumineux (9) pour les trois couleurs primaires (r, g, b), avec des couleurs primaires alternées en lignes, et leur groupement en colonne pour former des points d'image individuels (10).

7. Dispositif de reproduction selon la revendication 6, caractérisé par une commande électronique de l'écran (1A), qui présente des dispositifs pour une temporisation variable ayant pour effet un décalage latéral de l'image sur quelques unités de trame.
